# EUROPÄISCHE PATENTSCHRIFT

(11) **EP 1 518 723 B1**
(45) Veröffentlichungstag und Bekanntmachung des Hinweises auf die Patenterteilung: **24.01.2007**
(21) Anmeldenummer: 03292354.2
(22) Anmeldetag: 25.09.2003
(51) Int. Cl.: B60H 1/00, H02P 3/08

(54) **Motorsteuerung für einen Motor zum Antrieb einer Luft-Klappe**
Motor control system for driving an air damper
Circuit de commande d'un moteur d'entraînement d'un volet

(43) Veröffentlichungstag der Anmeldung: 30.03.2005
(73) Patentinhaber: Behr France Rouffach SAS, 68250 Rouffach (FR)
(72) Erfinder: Knoerzer, Jean-Pierre, 54180 Heillecourt (FR); Le Day, Fred, 72000 Le Mans (FR)
(74) Vertreter: Grauel, Andreas

(56) Entgegenhaltungen:
- EP-A- 0 150 502
- EP-A- 1 096 656

## Beschreibung

Die Erfindung betrifft eine Motorsteuerung für einen Motor zum Antrieb einer Luft-Klappe, insbesondere für ein Belüftungssystem für ein Kraftfahrzeug, gemäß dem Oberbegriff des Anspruchs 1 sowie ein Verfahren zur Steuerung eines solchen, wie z.B. in der EP 1 096 656 offenbart.

An herkömmliche Motoren zum Antrieb von Luft-Klappen eines Kraftfahrzeug-Belüftungssystems ist bei Betrieb des Kraftfahrzeugs ständig Spannung angelegt. Dies verringert die Lebensdauer des Motors und erhöht den Energieverbrauch.

Es ist Aufgabe der Erfindung, eine verbesserte Motorsteuerung zur Verfügung zu stellen.

Diese Aufgabe wird gelöst durch eine Motorsteuerung mit den Merkmalen des Anspruchs 1. Vorteilhafte Ausgestaltungen sind Gegenstand der Unteransprüche.

Erfindungsgemäß ist eine Motorsteuerung für einen Motor zum Antrieb einer Luft-Klappe, insbesondere für ein Belüftungssystem für ein Kraftfahrzeug, vorgesehen, wobei die Schaltung der Motorsteuerung ein PTC-Element und eine parallel zu diesem geschaltete Diode aufweist, so dass der Motor in einer Stellung ausgeschaltet ist. Parallel zur Diode und zum PTC-Element ist ein Widerstand geschaltet, dieser kann jedoch auch unendlich sein, wobei diese in die Luft-Klappe integriert sind.

Im Stromkreis ist ein Wechselschalter zur Umkehr des Stomflusses vorgesehen, so dass zwischen zwei Drehrichtungen des Motors gewählt werden kann, wodurch die Luft-Klappe geöffnet oder geschlossen werden kann. Bevorzugt ist in der häufiger verwendeten Stellung der Luft-Klappe der Motor durch das PTC-Element ausgeschaltet, wobei das PTC-Element auch als PPTC-Element (PPTC: Polymere-Postive-Temperatur-Coefficient) ausgeführt sein kann.

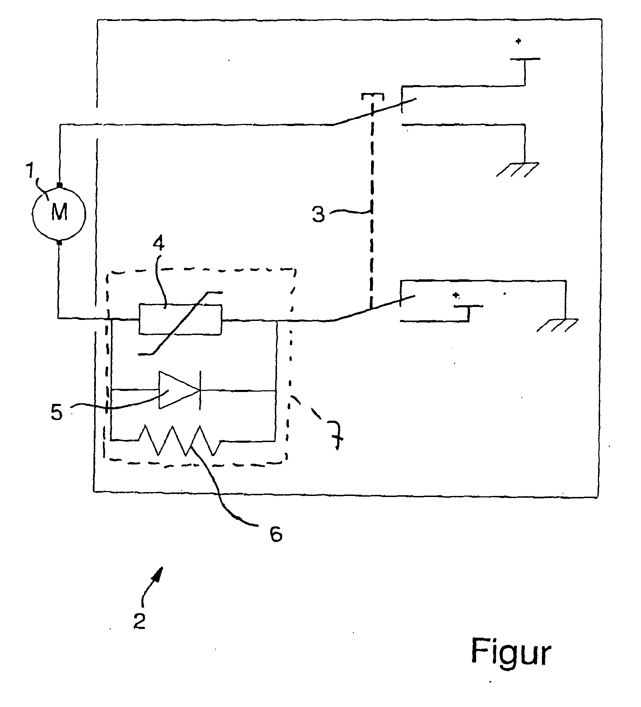

Im Folgenden wird die Erfindung anhand eines Ausführungsbeispiels unter Bezugnahme auf die Zeichnung im Einzelnen erläutert. Die einzige Figur der Zeichnung zeigt eine Schaltung eines Motors zum Antrieb von Lufteintritts-Klappen eines Kraftfahrzeug-Belüftungssystems.

Eine Motorsteuerung zur Steuerung eines Motors 1 einer Lufteintritts-Klappe (nicht dargestellt) eines Kraftfahrzeug-Belüftungssystems weist einen Schaltkreis 2 mit einem Wechselschalter 3, einem PTC-Element 4, einer Diode 5 und einem Widerstand 6 auf. Hierbei sind das PTC-Element 4, die Diode 5 und der Widerstand 6 parallel geschaltet und sind gemeinsam, wie durch den gestrichelt dargestellten Schaltungsteil 7 gezeigt wird, direkt in die Luft-Klappe integriert.

Die Figur zeigt den selteneren Umluftbetrieb, das heißt, die Lufteintritts-Klappe ist geschlossen. In dieser Stellung sperrt das PTC-Element 4, wobei es in seine Ruhestellung geht und bei umgekehrtem Stromfluss wieder leitend wird, während der Strom durch die parallel hierzu angeordnete Diode 5 und den ebenfalls parallel angeordneten Widerstand 6 fließen kann, so dass sich der Motor 1 dreht. Die am Motor 1 anliegende Spannung wird auch nach Beendigung der Drehung aufrechterhalten, wie bei herkömmlichen Schaltkreisen, so dass der Motor 1 während des Umluftbetriebs unter Strom steht.

Wird nun von Umluftbetrieb auf Frischluftbetrieb geschaltet, so wird der Wechselschalter 3 von der in der Figur dargestellten Stellung in seine andere Stellung bewegt und dadurch der Stromfluss umgedreht. Auf Grund der Richtungsumkehr des Stromflusses sperrt nunmehr die Diode 5, während das PTC-Element leitet. Ein Teil des Stroms fließt, wenn auch in anderer Richtung, durch den Widerstand 6. Der Motor 1 beginnt sich in die andere Richtung zu drehen, so dass die Lufteintritts-Klappe in geöffnet wird. Hat die Lufteintritts-Klappe die geöffnete Stellung erreicht, so kann sich der Motor 1 nicht mehr weiter drehen, so dass der vom Motor 1 aufgenommene Strom ansteigt, weshalb sich der Widerstand des PTC-Elements 4 erhöht und den Strom begrenzt. Daraufhin schaltet sich der Motor 1 ab, bis wiederum der Wechselschalter 3 betätigt und die Richtung des Stromflusses umgekehrt wird.

### Bezugszeichenliste

- 1: Motor
- 2: Schaltkreis
- 3: Wechselschalter
- 4: PTC-Element
- 5: Diode
- 6: Widerstand
- 7: Schaltungsteil 7

## Patentansprüche

1. Motorsteuerung für einen Motor (1) zum Antrieb einer Luft-Klappe, insbesondere für ein Belüftungssystem für ein Kraftfahrzeug, **dadurch gekennzeichnet, dass** der Schaltkreis (2) der Motorsteuerung ein PTC-Element (4) und eine parallel zu diesem geschaltete Diode (5) aufweist und parallel zur Diode (5) und zum PTC-Element (4) ein Widerstand (6) geschaltet ist, wobei diese in die Luft-Klappe integriert sind.

2. Motorsteuerung nach Anspruch 1, **dadurch gekennzeichnet, dass** ein Wechselschalter (3) zur Umkehr des Stomflusses vorgesehen ist.

3. Motorsteuerung nach einem der vorhergehenden Ansprüche, **dadurch gekennzeichnet, dass** in der häufiger verwendeten Stellung der Motor (1) durch das PTC-Element (4) ausgeschaltet ist.

4. Verfahren zur Steuerung einer Motorsteuerung nach Anspruch 1, **dadurch gekennzeichnet, dass** in der häufiger verwendeten Stellung der Luft-Klappe Strom über das PTC-Element (4) fließt und in der seltener verwendeten Stellung der Luft-Klappe Strom über die Diode (5) fließt.

5. Verfahren nach Anspruch 4, **dadurch gekennzeichnet, dass** während einer Drehung des Motors (1) keine die Drehung beeinträchtigende Strombegrenzung vorgesehen ist.

6. Verfahren nach Anspruch 4 oder 5, **dadurch gekennzeichnet, dass,** wenn die Drehung des Motors (1) auf Grund eines Anschlags der Luft-Klappe gestoppt wird, der vom Motor (1) aufgenommene Strom ansteigt, sich der Widerstand des PTC-Elements (4) erhöht und sich daraufhin der Motor (1) abschaltet.

7. Verfahren nach einem der Ansprüche 4 bis 6, **dadurch gekennzeichnet, dass** bei der Änderung der Stellung der Luft-Klappe aus der häufiger verwendeten Stellung in die weniger verwendete Stellung ein Wechselschalter (3) betätigt wird, der den Stromfluss umkehrt, so dass der Strom durch die Diode (5) fließt.

8. Verfahren nach Anspruch 7, **dadurch gekennzeichnet, dass** das PTC-Element (4) bei einem Stromfluss durch die Diode (5) leitend wird.

9. Verwendung einer Motorsteuerung gemäß einem der Ansprüche 1 bis 3 und/oder eines Verfahrens zur Steuerung einer Motorsteuerung (1) gemäß einem der Ansprüche 4 bis 8 in einem Belüftungssystem eines Kraftfahrzeugs.

## Claims

1. A motor control system for a motor (1) for driving an air damper, in particular for a ventilation system for a motor vehicle,
**characterised in that**
the switching circuit (2) of the motor control system has a PTC element (4) and a diode (5) connected parallel to said PTC element (4), and connected parallel to the diode (5) and the PTC element (4) is a resistor (6), these being integrated in the air damper.

2. A motor control system in accordance with claim 1,
**characterised in that**
a pole-reversing switch (3) is provided to reverse the current flow.

3. A motor control system in accordance with one of the preceding claims,
**characterized in that**
in the more frequently used position the motor (1) is shut off by the PTC element (4).

4. A process for controlling a motor control system in accordance with claim 1,
**characterised in that**
when the air damper is in the more frequently used position current flows via the PTC element (4) and in the less frequently used position of the air damper current flows via the diode (5).

5. A process in accordance with claim 4,
**characterised in that**
while the motor (1) is turning no current limitation which impedes this turning is provided.

6. A process in accordance with claim 4 or 5,
**characterised in that**
if the turning of the motor (1) is stopped due to a stop on the air damper, the current taken from the motor (1) and the resistance of the PTC element increase and the motor (1) then shuts off.

7. A process in accordance with one of claims 4 to 6,
**characterised in that**
if the air damper is moved from the more frequently used position into the less frequently used position a pole-changing switch (3) is operated which reverses the current flow such that the current flows through the diode (5).

8. A process in accordance with claim 7,
**characterised in that**
the PTC element becomes conductive when current flows through the diode (5).

9. The use of a motor control system in accordance with one of claims 1 to 3 and/or a process for controlling a motor control system in accordance with one of claims 4 to 8 in a ventilation system in a motor vehicle.

## Revendications

1. Commande pour un moteur (1) destiné à actionner un volet de distribution d'air, en particulier pour un système de ventilation dans un véhicule automobile, **caractérisée en ce que** le circuit (2) de la commande du moteur comporte un élément PTC (4) et une diode (5) montée en parallèle à ce dernier, et une résistance (6) est montée en parallèle à la diode (5) et à l'élément PTC (4), ladite résistance étant intégrée dans le volet de distribution d'air.

2. Commande selon la revendication 1, **caractérisée en ce qu'**il est prévu un inverseur de courant (3) destiné à inverser le flux du courant.

3. Commande selon l'une quelconque des revendications précédentes, **caractérisée en ce que**, dans la position plus fréquemment utilisée, le moteur (1) est désactivé par l'élément PTC (4).

4. Procédé de commande d'une commande de moteur selon la revendication 1, **caractérisé en ce que**, dans la position plus fréquemment utilisée du volet de distribution d'air, le courant circule en passant par l'élément PTC (4) et, dans la position plus rarement utilisée du volet de distribution d'air, le courant circule en passant par la diode (5).

5. Procédé selon la revendication 4, **caractérisé en ce que**, pendant une rotation du moteur (1), il n'est prévu aucune limitation du courant pouvant entraver la rotation.

6. Procédé selon la revendication 4 ou 5, **caractérisé en ce que**, lorsque la rotation du moteur (1) est arrêtée en raison d'une butée du volet de distribution d'air, le courant absorbé par le moteur (1) croît, la résistance de l'élément PTC (4) augmente et, en conséquence, le moteur (1) se déconnecte.

7. Procédé selon l'une quelconque des revendications 4 à 6, **caractérisé en ce que**, en cas de changement de position du volet de distribution d'air hors de la position plus fréquemment utilisée dans la position plus rarement utilisée, un inverseur de courant (3) est actionné, lequel inverse le courant de telle sorte que le courant circule en passant par la diode (5).

8. Procédé selon la revendication 7, **caractérisé en ce que** l'élément PTC (4) devient conducteur lorsque le flux de courant passe par la diode (5).

9. Utilisation d'une commande de moteur selon l'une quelconque des revendications 1 à 3 et/ou d'un procédé destiné à commander une commande de moteur (1) selon l'une quelconque des revendications 4 à 8, dans un système de ventilation d'un véhicule automobile.
